(19)

**Europäisches Patentamt**
**European Patent Office**
**Office européen des brevets**

(11)  **EP 4 141 381 B1**

(12)  **EUROPEAN PATENT SPECIFICATION**

(45) Date of publication and mention
of the grant of the patent:
**23.07.2025   Bulletin 2025/30**

(21) Application number: **22191761.0**

(22) Date of filing: **23.08.2022**

(51) International Patent Classification (IPC):
***G01B 11/06*** *(2006.01)*

(52) Cooperative Patent Classification (CPC):
**G01B 11/0691; G01B 11/0616;** G01B 2210/44

(54) **METHOD AND APPARATUS FOR TREAD MEASUREMENT**

VERFAHREN UND VORRICHTUNG ZUR LAUFFLÄCHENMESSUNG

PROCÉDÉ ET APPAREIL DE MESURE DE BANDE DE ROULEMENT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **30.08.2021   US 202163260703 P
27.07.2022   US 202217815310**

(43) Date of publication of application:
**01.03.2023   Bulletin 2023/09**

(73) Proprietor: **The Goodyear Tire & Rubber
Company
Akron, OH 44316 (US)**

(72) Inventors:
• **ORLEWSKI, Pierre Felix
L-9021 Ettelbruck (LU)**
• **SCHWEITZER, Claude
L-7750 Colmar-Berg (LU)**
• **DELROISSE, Pauline Monique Marie-Lucie
Ghislaine
B-6741 Vance (BE)**
• **FOURME, Sylvain
L-7663 Medernach (LU)**

(74) Representative: **Kutsch, Bernd
Goodyear S.A.
Patent Department
Avenue Gordon Smith
7750 Colmar-Berg (LU)**

(56) References cited:
**EP-A1- 3 266 582        US-A1- 2016 047 753
US-A1- 2021 262 776**

## Description

<u>Field of the Invention</u>

The invention relates to a method and an apparatus for determining a material layer thickness in a manufacture of tire components, and more particularly, for determining a tread layer thickness.

<u>Background of the Invention</u>

The manufacture of treads for vehicle tires is typically made with extruders. Treads are also conventionally formed of several layers of material, which may be made of different materials in order to provide the desired performance. It is important that each tread layer have a uniform and consistent thickness for tire uniformity and performance. It is known to use radar technology for tread layer thickness measurements during tread manufacture. This technology, however, has significant limitations when a tread layer contains one or more conductive compounds that have a low electrical resistivity. Such materials absorb radiation from the radar technology, and the measurement of the conductive tread layer becomes problematic or impossible. It is thus desired to have a method and an apparatus that overcome this limitation.

EP 3 266 582 A1 describes a method in accordance with the preamble of claim 1.

<u>Summary of the Invention</u>

The invention relates to a method of accordance with claim 1 and to an apparatus in accordance with claim 9.

Dependent claims refer to preferred embodiments of the invention.

The invention provides in a first preferred aspect a method of measuring a thickness of a tire tread comprising the steps of: providing a tire tread, wherein the tire tread has a first tread layer formed of a conductive compound and a second tread layer formed of a non-conductive compound; continuously conveying the tire tread with a first sensor and a second sensor arranged above and below the tire tread, respectively, wherein the first and second sensors are configured for emitting first and second radiation beams, respectively, into the tire tread and receiving from the first radiation beam a first reflected radiation beam from a surface of the first tread layer and determining a first distance d1, receiving from the second radiation beam a second reflected radiation beam from an interface of the first and second tread layers and determining a second distance d2, and receiving from the second radiation beam a third reflected radiation beam from a surface of the second tread layer and determining a third distance d3, and wherein the first and second sensors are connected together at a fixed height D; and carrying out a continuous material thickness measurement of the first and second tread layers by emitting the first and second radiation beams by the first and second sensors, respectively, receiving the first, second, and third reflected radiation beams, and then determining a thickness d4 of the first tread layer by subtracting distances d1, d2, and d3 from the fixed height D.

The invention provides in a second preferred aspect an apparatus for measuring a depth of each tread layer of a tire tread having at least two tread layers comprising: a bridge table having an upper surface for conveying the tire tread thereon and a plurality of support legs to support the bridge table, a first sensor and a second sensor, wherein the first sensor is connected to a step motor mounted to an upper rail located above the upper surface of the bridge table for translating the first sensor across a width of the upper surface of the bridge table, wherein the first sensor is rigidly connected to the second sensor by a translating support frame, and wherein the translating support frame and the second sensor translate with the first sensor.

The invention thus allows a continuous on-site monitoring of extruded tread layers.

<u>Definitions</u>

"Ply" means a continuous layer of rubber-coated parallel cords.

"Radial" and "radially" mean directions radially toward or away from an axis of rotation of a tire.

<u>Brief Description of the Drawings</u>

The invention will be described by way of example and with reference to the accompanying drawings in which:

FIG. 1A is a schematic cross-sectional view of a tire tread having non-conductive tread layers undergoing terahertz radiation according to the invention;
FIG. 1B is a schematic cross-sectional view of a tire tread having a conductive outer tread layer undergoing terahertz radiation according to the invention;
FIG. 2 is a schematic illustrating a tire tread having a conductive outer tread layer undergoing a double sided, differential measurement according to the invention;
FIG. 3 illustrates a continuous tire tread or tire component being continuously conveyed on a conveyor belt system, and a continuous measurement system;
FIG. 4 illustrates a bridge table and a continuous measurement system; and FIG. 5 illustrates a second embodiment of the invention.

<u>Detailed Description of Preferred Embodiments of the Invention</u>

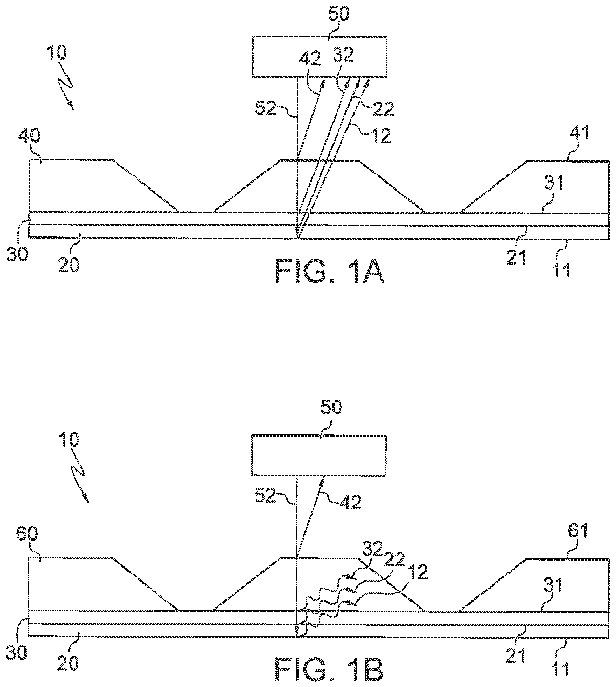

FIG. 1A illustrates a measurement system 10 for measuring a thickness of each layer of a tire tread or a tire component, such as a sidewall or ply composite, wherein each layer may be made of a different compound. A typical tire tread is formed of different layers of compounds to provide a desired rolling resistance and other performance characteristics.

FIG. 1A illustrates a typical tire tread having a base tread layer 20 formed of a base tread compound, a middle tread layer 30 formed of a first tread compound, and an outer tread layer 40 formed of a second tread compound. The base tread compound, the first tread compound, and the second tread compound are each electrically non-conductive.

As shown in FIG. 1A, a terahertz (THz) sensor 50 may be arranged above (or below) the tire tread to measure a thickness of each tread layer 20, 30, 40. The terahertz sensor 50 has a radiation source for emitting continuous electromagnetic radiation beams or pulses in a THz frequency range. For the sake of simplicity, in the remaining disclosure, the term "beam" shall be inclusive of a beam or a pulse. The terahertz sensor 50 preferably continuously emits a high frequency incident radiation beam 52 that travels through the air and the tread layers 40, 30, 20. The incident radiation beam 52 is in a frequency range of 100 GHz to 10 THz, and more preferably in a frequency range of 100 to 400 GHz. A reflection of the incident radiation beam occurs at a radially outer surface 41 of the outer tread layer 40, at an interface 31 between the outer and middle tread layers 40, 30, at an interface 21 between the middle and base tread layers 30, 20, and at a radially inner surface 11 of the base tread layer 20. Thus, the incident radiation beam 52 is reflected from the radially outer surface 41 of the outer tread layer 40 and is shown as a reflected radiation beam 42. Likewise, the incident radiation beam 52 is reflected from the interface 31 between the outer and middle tread layers 40, 30 and is shown as a reflected radiation beam 32. Also, the incident radiation beam 52 is reflected from the interface 21 between the middle and base tread layers 30, 20 and is shown as reflected radiation beam 22. Lastly, the incident radiation beam 52 is reflected from the radially inner surface 11 of the base tread layer 20 and is shown as reflected radiation beam 12.

The terahertz sensor 50 includes a receiving device for receiving the reflected radiation beams 42, 32, 22, 12, wherein a distance from the radially outer surface 41 of the outer tread layer 40, the tread interfaces 31, 21, and the radially inner surface 11 of the base tread layer 20 to the terahertz sensor 50, respectively, is measured. The thicknesses of each tread layer 20, 30, 40 can then be calculated.

The receiving device of the terahertz sensor 50 that receives each reflected radiation beam 42, 32, 22, 12 records data in a time domain format or in a frequency domain format. A time between reflections is a time of flight, or TOF, and is used to calculate a thickness of a tread layer. The equation to calculate a thickness of a tread layer is:

$$\text{Thickness} = (\text{time of flight})/2*c/RI$$

wherein c is the speed of light, and RI is the refractive index of each tread layer.

FIG. 1B illustrates a measurement system 10 for measuring a thickness of each layer of a tire tread similar to that of FIG. 1A, but which includes a tire tread having an outer tread layer 60 formed of an electrically conductive compound, or having a volume resistivity of less than 10 E 9 Ohm*cm, as determined using a Keithley Resistivity Chamber. As shown in FIG. 1B, the terahertz sensor 50 emits the incident radiation beam 52, which travels through the air, a radially outer surface 61 of the outer tread layer 60, the outer tread layer 60, the middle tread layer 30, and the base tread layer 20. The incident radiation beam 52 is reflected from a radially outer surface 61 of the outer tread layer 60 and is shown as the reflected radiation beam 42. The reflected radiation beam 42 is then received by the receiving device of the terahertz sensor 50. However, because the tread has a conductive outer tread layer 60, the reflected radiation beams 32, 22, 21 are absorbed by the outer tread layer 60. The reflected radiation beams 32, 22, 12 are thus not received by the receiving device of the terahertz sensor 50. As a result, a distance from the terahertz sensor 50 to the other surface and interfaces 31, 21, 11 cannot be determined, and ultimately, a thickness of tread layers 60, 30, 20. In order to overcome this problem, the following method and apparatus may be utilized.

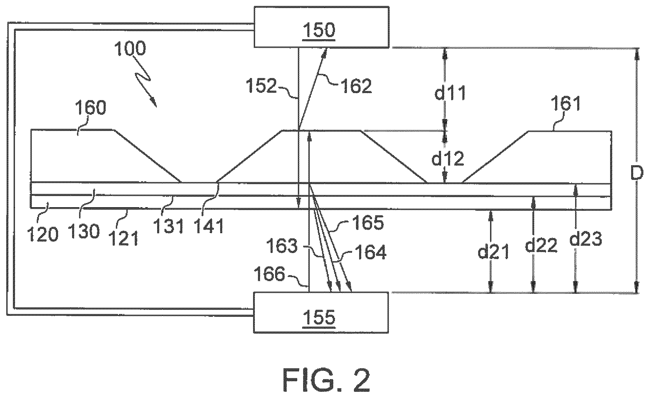

FIG. 2 illustrates a method of a double sided, differential measurement using a dual sensor measurement system 100 to determine a thickness of each layer of a tire tread or a tire component having a conductive outer layer.

Specifically, as shown in FIG. 2, a tire tread includes an outer tread layer 160 formed of a conductive compound, or a layer having low emissivity, a middle tread layer 130 formed of a non-conductive compound, and a base tread layer 120 formed of a non-conductive compound. An upper terahertz sensor 150 has a radiation source for emitting continuous electromagnetic radiation beams in a THz frequency range. The upper terahertz sensor 150 emits an incident radiation beam or pulse 152 that travels through the air, the outer tread layer 160, the middle tread layer 130, and the base tread layer 120. The incident radiation beam 152 is reflected from a radially outer surface 161 of the outer tread layer 160 and is shown as a reflected radiation beam 162. The reflected radiation beam 162 is received by a receiving device of the upper terahertz sensor 150 and a distance d11 between the upper terahertz sensor 150 and the radially outer surface 161 is determined.

For the purpose of this application, an electrically non-conductive compound means a compound having a volume resistivity of at least $10^9$ Ohm*cm, as determined using a Keithley Resistivity Chamber.

For the purpose of this application, an electrically conductive compound means a compound having a volume resistivity of less than $10^9$ Ohm*cm, as determined using a Keithley Resistivity Chamber, preferably less than $10^8$ Ohm*cm.

The incident radiation beam 152 is also reflected from an interface 141 between the outer tread layer 160 and the middle tread layer 130, an interface 131 between the middle tread layer 130 and the base tread layer 120, and a radially inner surface 121 of the base tread layer 120. However, each of these reflected radiation beams is absorbed by the conductive outer tread layer 160. As a result, a distance between the upper terahertz sensor 150 and each interface and surface 141, 131, 121 cannot be determined, and ultimately, a thickness d12 of the outer tread layer 160.

In order to determine the thickness d12 of the outer tread layer 160, a lower terahertz sensor 155 is used in conjunction with the upper terahertz sensor 150. The lower terahertz sensor 155 also has a radiation source for emitting continuous electromagnetic radiation beams in a THz frequency range. The lower sensor 155 emits an incident radiation beam or pulse 166 that travels through the air, the radially inner surface 121 of the base tread layer 120, and each tread layer 120, 130, 160. The incident radiation beam 166 is reflected from the radially outer surface 161 of the outer tread layer 160, however, it is absorbed by the conductive outer tread layer 160. Because the tread layers 120 and 130 are non-conductive, reflections of the incident radiation beam 166 are possible with respect to tread layers 120 and 130. The incident radiation beam 166 is reflected from the radially inner surface 121 of the base tread layer 120 and is shown as a reflected radiation beam 163. The reflected radiation beam 163 is received by a receiving device of the lower terahertz sensor 155 and a distance d21 between the lower terahertz sensor 155 and the radially inner surface 121 is determined. Also, the incident radiation beam 166 is reflected from the interface 131 of the middle tread layer 130 and the base tread layer 120 and is shown as a reflected radiation beam 164. The reflected radiation beam 164 is received by the receiving device of the lower terahertz sensor 155 and a distance d22 between the lower terahertz sensor 155 and the interface 131 of the middle tread layer 130 and the base tread layer 120 is determined. Additionally, the incident radiation beam 166 is reflected from the interface 141 of the middle tread layer 130 and the outer tread layer 160 and is shown as a reflected radiation beam 165. The reflected radiation beam 165 is received by the receiving device of the lower terahertz sensor 155 and a distance d23 between the lower terahertz sensor 155 and the interface 141 of the middle tread layer 130 and the outer tread layer 160 is determined.

The thickness d12 of the outer tread layer 160 can then be determined as follows:

$$d12 = D - (d11 + d23)$$

wherein D is the fixed distance or height between the sensors.

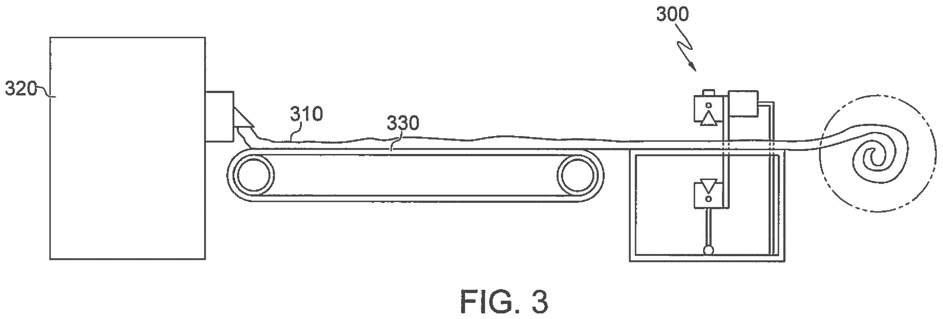

FIG. 3 illustrates a typical scenario when a continuous measurement system 300 may be utilized. A tire tread or tire component 310 is continuously formed by an extrusion system 320 and then continuously conveyed on a conveyor belt system 330 to the continuous measurement system 300.

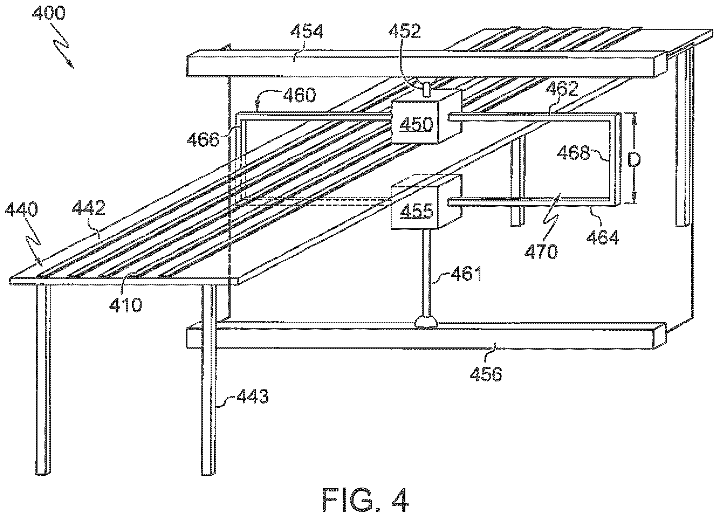

As shown in FIG. 4, a continuous measurement system 400 includes a bridge table 440 having an upper surface 442 for supporting a tire tread or a tire component 410. The bridge table 440 includes a plurality of support legs 443. The measurement system 400 further includes an upper terahertz sensor 450 and a lower terahertz sensor 455. The upper terahertz sensor 450 is mounted to a step motor 452. The step motor 452 is optionally mounted on a C-frame or an upper rail 454 located above the upper surface 442 of the bridge table 440. In an example including the optional upper rail 454, the upper rail 454 is mounted across a width of the bridge table 440, and thus perpendicular to a longitudinal axis of the bridge table 440. The upper terahertz sensor 450 can thus translate across the width of the bridge table 440, and thus a width of the tire tread or tire component 410, by the step motor 452 to take continuous depth measurements of each surface and interface of each layer of the tire tread or the tire component 410.

The lower terahertz sensor 455 is fixedly connected to the upper terahertz sensor 450 via a translating support frame 460 so that the upper and lower terahertz sensors 450, 455 maintain a fixed height apart from each other of a distance D and move in sync together. The upper and lower terahertz sensors 450, 455 are mounted to the translating support frame 460. The translating support frame 460 has an upper frame member 462 connected to the upper terahertz sensor 450, a lower frame member 464 connected to the lower terahertz sensor 455, and two opposed side members 466, 468 that are rigidly connected to the upper and lower frame members 462, 464. The translating support frame 460 has an open interior or window 470 that is positioned around a portion of the bridge table 440 to allow the tire tread or tire component 410 to freely pass through the window 470 while the upper and lower sensors 450, 455 take measurements. The translating support frame 460 and upper and lower terahertz sensors 450, 455 translate in unison by the step motor 452. The lower terahertz sensor 455 is optionally connected to the lower support rail 456 by a support member 461 to provide stability.

Each terahertz sensor 450, 455 has a adiation source for emitting electromagnetic radiation beams or pulses in a THz frequency range and a receiving device for receiving a reflected radiation by a layer of the tire tread or the tire component 410. The electromagnetic radiation beams or pulses are in the terahertz frequency range of 100 GHz to 10 THz, and more preferably in a frequency range of 100 to 400 GHz.

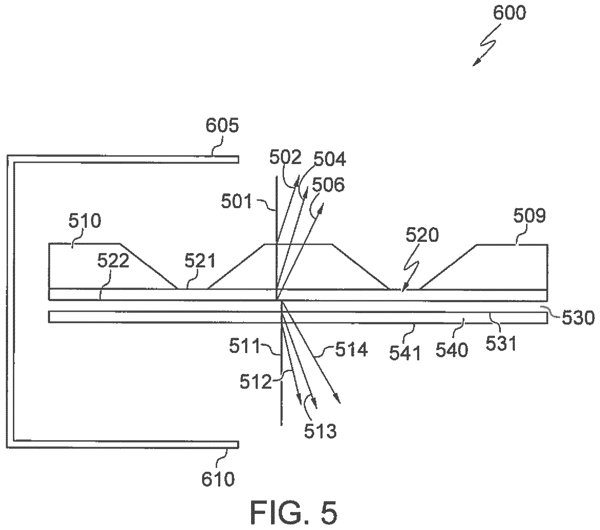

FIG. 5 illustrates a method of a double sided, differential measurement using a dual sensor system 600 that is similar to the method shown in FIG. 2. FIG. 5 shows a tire tread having a non-conductive outer tread cap layer 510, an optional non-conductive inner tread cap layer 520, a conductive base tread layer 530, and an optional conductive cushion gum layer 540. Because the tread 500 includes the conductive base tread layer 530 and the optional conductive cushion gum layer 540, a dual sensor measurement system 600 having an upper sensor 605 and a lower sensor 610 is needed to determine a thickness of the tread layers 510, 520, 530, 540.

In some examples, the lower sensor 610 may be a lower frequency sensor. The lower sensor 610 measures a depth of the conductive base tread layer 530 and a depth of the optional conductive cushion gum layer 540. If a lower frequency sensor is used, a preferred frequency range is 50 to 200 GHz. A pulsed terahertz radar may also be used for the lower sensor 610. The pulsed sensor may have a frequency range of 50 GHz to 2.2 THz or 50 to 400 GHz.

In examples where the optional cushion gum layer 540 is not included, the lower sensor 610 emits an incident radiation beam 511 that travels through the air, a radially inner surface 531 of the base tread layer 530, and the base tread layer 530. The incident radiation beam 511 is reflected from the radially inner surface 531 of the base tread layer 530 and is shown as a reflected radiation beam 513. The reflected radiation beam 513 is received by a receiving device of the lower sensor 610 and a distance between the lower sensor 610 and the radially inner surface 531 of the base tread layer 530 is determined.

In examples where the optional cushion gum layer 540 is included, the lower sensor 610 emits an incident radiation beam 511 that travels through the air, a radially inner surface 541 of the cushion gum layer 540, the cushion gum layer 540, and the base tread layer 530. The incident radiation beam 511 is reflected from the radially inner surface 541 of the cushion gum layer 540 and is shown as a reflected radiation beam 512. The reflected radiation beam 512 is received by the receiving device of the lower sensor 610 and a distance between the lower sensor 610 and the radially inner surface 541 of the cushion gum layer 540 is determined.

In examples where there the optional inner tread cap layer 520 is not included, the lower sensor emits an incident radiation beam 511 that travels through the air, the radially inner surface 541 of the optional cushion gum layer 540 (if included), the optional cushion gum layer 540 (if included), and the base tread layer 530. The incident radiation beam 511 from the lower sensor 610 is reflected from an interface 522 of the base tread layer 530 and the outer tread layer 510 and is shown as a reflected radiation beam 514. The reflected radiation beam 514 is received by the receiving device of the lower sensor 610 and a distance between the lower sensor 610 and the interface 522 of the base tread layer 530 and the outer tread layer 510 is determined.

Additionally, in examples where the optional inner tread cap layer 520 is included, the lower sensor emits an incident radiation beam 511 that travels through the air, the radially inner surface 541 of the optional cushion gum layer 540 (if included), the optional cushion gum layer 540 (if included), and the base tread layer 530. The incident radiation beam 511 from the lower sensor 610 is reflected from an interface 522 of the base tread layer 530 and the inner tread cap layer 520 and is shown as a reflected radiation beam 514. These measurements may be used to determine a thickness of each conductive tread layer 530, 540.

In some examples, the upper sensor 605 may be the same as the lower sensor 610. In other examples, a frequency modulated continuous wave (FMCW) terahertz radar is used for the upper sensor 605, which measures the non-conductive outer tread cap layer 510 and the optional non-conductive inner tread cap layer 520. The FMCW frequency may be in a range of 100 to 300 GHz with a bandwidth of 90 GHz. When a FMCW radar is used, a distance to each interface or layer is given by:

$$\text{Distance} = \frac{c}{2RI} \; \frac{\Delta f}{d\,f/d\,t}$$

where

c = speed of light
RI = refractive index
Df = difference between emitted and received frequency
df/dt = frequency change rate

In examples where the optional inner tread cap layer 520 is not included, the upper sensor 605 emits an incident radiation beam 501 that travels through the air, the radially outer surface 509 of the outer tread cap layer 510, and the outer tread cap layer 510. The incident radiation beam 501 is reflected from the radially outer surface 509 of the outer tread cap layer 510 and is shown as a reflected radiation beam 502. The incident radiation beam 501 is also reflected from an interface 521 of the outer tread cap layer 510 and the base tread layer 530 and is shown as a reflected radiation beam 504. The reflected radiation beams 502, 504 are received by a receiving device of the upper sensor 605 and distances between the upper sensor 605 and the radially outer surface 509 of the outer tread cap layer 510 and the upper sensor 605 and the interface 521 of the outer tread cap layer 510 and the base tread layer 530 are determined.

In examples where the optional inner tread cap layer 520 is included, the upper sensor 605 emits an incident radiation beam 501 that travels through the air, the radially outer surface 509 of the outer tread cap layer 510, the outer tread cap layer 510, and the inner tread cap layer 520. The incident radiation beam 501 is reflected from the interface 521 of the outer tread cap layer 510 and the inner tread cap layer 520 and is shown as a reflected radiation beam 504. Additionally, the incident radiation beam 501 is reflected from an interface 522 of the inner tread cap layer 520 and the base tread layer 530 and is shown as a reflected radiation beam 506. These measurements may be used to determine a thickness of each tread layer 510, 520.

In cases where it is difficult to see an interface of the tread layers due to small differences in refractive index RI of less than 3%, it is possible to better "see" an interface by using the upper and lower sensors 605, 610, and then superimposing spectra data collected from the upper and lower sensors 605, 610.

The measurement system 600 may further include an electronic control system that is communicatively coupled with the upper and lower sensors 605, 610 and a step motor connected to the upper sensor 605. The electronic control system may include a processor and a memory, in combination with a plurality of sensors and actuators, to carry out the various controls described herein. In one example, an evaluation device is included as a module in a control system. Further, the control system may include a display for displaying data regarding a tire generated by the evaluation device. For example, radiation pulses described below may be displayed on the display.

The measurements as described above can be carried out both with a THz pulse or a THz wave, such as a sinusoidal wave, as excitation. In pulse systems, we speak of time domain spectrometers; in wave systems, we speak of frequency domain spectrometers. There are apparatuses that detect both an amplitude and a travel time of a signal, as well as apparatuses that only determine an amplitude.

By Fourier transformation, a measured time signal can be converted to a frequency domain. An amplitude is recovered in the frequency domain in a form of a frequency-dependent amplitude that is in a form of an amplitude spectrum, and a travel time is recovered in a form of a frequency-dependent phase, that is in a form of a phase spectrum. For a spectral analysis, a so-called transfer function can be determined, that is to say, a quotient of a sample spectrum divided by a reference spectrum. From the transfer function, a frequency-dependent refractive index of a rubber sample can be determined. Such parameter is a characteristic material variable for the rubber sample. The refractive index here is a proxy for an optical density or a time delay that the rubber sample caused. If the refractive index is known, one rubber sample measurement is sufficient for a layer thickness determination.

Regarding any of the tire tread or tire component examples explained herein, the tire tread or a tire component is not limited to the layer configurations as described. For example, a tire tread may have a base tread layer and an outer tread layer including both a first outer tread layer compound and a second outer layer tread compound. The first outer tread layer compound and the second outer layer tread compound may be conductive or non-conductive. The first and second outer tread layer compounds may account for portions of an axial width of the outer tread layer, such that the first outer tread layer compound accounts for a first portion of an axial width of the outer tread layer and the second outer tread layer compound accounts for a second portion of the axial width of the outer tread layer. The first and second outer tread layer compounds have an interface wherein the first and second outer tread layer compounds are adjacent.

One of the first and second outer tread layer compounds may also account for a third portion of the axial width of the outer tread layer, such that the outer tread layer alternates the first and second outer tread layer compounds along the axial width of the outer tread layer. In one example, a first outer tread layer compound accounts for a first portion of an axial width of the outer tread layer, a second outer tread layer compound accounts for a second portion of the axial width of the outer tread layer, and the first outer tread layer compound accounts for a third portion of the axial width of the outer tread layer. The first and second outer tread layer compounds have a first interface where the first and second portions are adjacent, and the second and first outer tread layer compounds have a second interface where the second and third portions are adjacent. A sensor or dual sensor measurement system may be used to measure a thickness of the base tread layer and the outer tread layer as explained herein.

**Claims**

1. A method of measuring a thickness of a tire tread, the method comprising the steps of:

   providing a tire tread, wherein the tire tread at least has a first tread layer (160) formed of a first compound and a second tread layer (130) formed of a second compound, wherein the electrical conductivity of the first compound is higher than the electrical conductivity of the second compound or wherein the first compound is an electrically conductive compound and the second compound is an electrically non-conductive compound;
   continuously conveying the tire tread;
   arranging a first terahertz sensor (150) and a second terahertz sensor (155) above and below the tire tread, respectively, wherein the first and second terahertz sensors (150, 155) are configured for emitting first and second radiation beams (152, 166), respectively, into the tire tread;

receiving from the first radiation beam a first reflected radiation beam (162) from a surface (161) of the first tread layer (160) and determining a first distance (d1);

receiving from the second radiation beam (166) a second reflected radiation beam (165) from an interface (141) of the first and second tread layers (160, 130) and determining a second distance (d2);

receiving from the second radiation beam (166) a third reflected radiation beam (164) from a surface of the second tread layer (130) and determining a third distance (d3), and

carrying out a material thickness measurement, preferably a continuous, repeated or periodical material thickness measurement during the continuous conveying of the tire tread, of the first and second tread layers (120, 160) by emitting the first and second radiation beams (152, 166) by the first and second terahertz sensors (150, 155), respectively, receiving the first, second, and third reflected radiation beams (162, 165, 164), **characterized in that**

the first and second terahertz sensors (150, 155) are connected together at a fixed sensor distance or sensor height (D) and that the first and second terahertz sensors (150, 155) are arranged colinear, and **in that** said carrying out a material thickness measurement determines a thickness (d4) of the first tread layer (160) using said first, second and third distances (d1, d2, d3) and said fixed sensor distance or sensor height (D).

2. The method of claim 1 wherein determining the thickness (d4) of the first tread layer (160) comprises subtracting said first, second and third distances (d1, d2, d3) from said fixed sensor distance or sensor height (D).

3. The method of claim 1 or 2, wherein the first and second terahertz sensors (150, 155) are one of a same sensor and a different sensor.

4. The method of at least one of the previous claims, wherein the first and/or the second terahertz sensor (150, 155) is one of a pulsed terahertz sensor and a pulsed frequency sensor.

5. The method of at least one of the previous claims, wherein the tire tread further includes a third tread layer (120) formed of an electrically non-conductive compound.

6. The method of at least one of the previous claims, wherein the first and/or the second terahertz sensor (150, 155) is a low frequency terahertz sensor having a frequency range of from 50 to 200 GHz; or wherein the first and/or the second terahertz sensor (150, 155) is a pulsed frequency sensor having a frequency range of from 50 GHz to 2.2 THz or of from 50 GHz to 400 GHz.

7. The method of at least one of the previous claims, wherein one or both of the first and second terahertz sensors (150, 155) is a frequency modulated continuous wave terahertz sensor.

8. The method of at least one of the previous claims, wherein a first spectra data from the first terahertz sensor (150) is superimposed over a second spectra data from the second terahertz sensor (155).

9. An apparatus for measuring a depth or thickness of several tread layers or of each tread layer of a tire tread having at least two tread layers (130, 160), the apparatus (400) comprising:

    a bridge table (440) having an upper surface (442) for conveying the tire tread thereon and preferably a plurality of support legs (443) to support the bridge table (440);
    a first terahertz sensor (450) and a second terahertz sensor (455);
    wherein the first terahertz sensor (450) is connected to translation means (452) for translating the first terahertz sensor (450) across a width of the upper surface (442) of the bridge table (440);
    wherein the first terahertz sensor (450) is rigidly connected to the second terahertz sensor (455) by a translating support frame (460);
    wherein the translating support frame (460) and the second terahertz sensor (455) translate with the first terahertz sensor (450); and
    wherein the first and second terahertz sensors are arranged colinear.

10. The apparatus of claim 9, wherein the second terahertz sensor (455) is located below the upper surface (442) of the bridge table (440) wherein the first terahertz sensor (450) is located above the upper surface (442) of the bridge table (440).

11. The apparatus of claim 9 or 10, wherein translation means (452) is or comprises a step motor (452) and/or wherein the translation means (452) is mounted to an upper rail (454) located above the upper surface (442) of the bridge table (440).

12. The apparatus of at least one of the previous claims 9 to 11, wherein the first and second terahertz sensors (450, 455) are separated and arranged by a fixed distance (D) by means of the translating support frame (460).

13. The apparatus of at least one of the previous claims 9 to 12, wherein one or both of the first and second terahertz sensors (450, 455) is a frequency modulated continuous wave terahertz sensor or a pulsed terahertz sensor.

14. The apparatus of at least one of the previous claims 9 to 13, wherein at least one of the first and second terahertz sensors (450, 455) is a low frequency terahertz sensor having a frequency range of from 50 to 200 GHz, and/or wherein at least one of the first and second sensors (450, 455) is a pulsed frequency sensor having a frequency range of from 50 GHz to 2.2 THz or from 50 GHz to 400 GHz.

**Patentansprüche**

1. Verfahren zum Messen einer Dicke einer Lauffläche eines Luftreifens, wobei das Verfahren die folgenden Schritte umfasst, wobei:

   eine Lauffläche eines Luftreifens bereitgestellt wird, wobei die Lauffläche des Reifens mindestens eine erste aus einer ersten Verbindung hergestellte Laufflächenschicht (160) und eine zweite aus einer zweiten Verbindung hergestellte Laufflächenschicht (130) besitzt; wobei die elektrische Leitfähigkeit der ersten Verbindung größer ist als die elektrische Leitfähigkeit der zweiten Verbindung; oder wobei die erste Verbindung eine elektrisch leitende Verbindung ist und die zweite Verbindung eine nicht-elektrisch leitende Verbindung ist;
   die Lauffläche des Luftreifens kontinuierlich übertragen wird;
   ein erster Terahertz-Sensor (150) und ein zweiter Terahertz-Sensor (155) über bzw. unter der Lauffläche des Luftreifens angebracht werden; wobei der erste und der zweite Terahertz-Sensor (150, 155) so ausgebildet sind, dass sie einen ersten bzw. einen zweiten Strahl von Strahlung (152, 166) in die Lauffläche des Reifens emittieren;
   ein erstes Strahlenbündel, das von einer Oberfläche (161) der ersten Laufflächenschicht (160) reflektiert wird (162), aus dem ersten Strahlenbündel empfangen wird, und ein erster Abstand (d1) bestimmt wird;
   ein zweites Strahlenbündel (165), das von einer Grenzfläche (141) der ersten und der zweiten Laufflächenschicht (160, 130) reflektiert wird, von dem zweiten Strahlenbündel (166) empfangen wird, und ein zweiter Abstand (d2) bestimmt wird;
   ein drittes Strahlungsbündel (164), das von einer Oberfläche der zweiten Laufflächenschicht (130) reflektiert wird, von dem zweiten Strahlungsbündel (166) empfangen wird, und ein dritter Abstand (d3) bestimmt wird; und
eine Messung der Materialdicke, vorzugsweise eine kontinuierliche, wiederholte oder periodische Messung der Materialdicke, während des kontinuierlichen Transports der Lauffläche des Luftreifens, der ersten und der zweiten Laufflächenschicht (120, 160) durchgeführt wird, wobei das erste und das zweite Strahlungsbündel (152, 166) durch den ersten bzw. den zweiten Terahertz-Sensor (150, 155) emittiert werden und das erste, das zweite und das dritte reflektierte Strahlungsbündel (162, 165, 164) empfangen werden, **dadurch gekennzeichnet, dass**

der erste und der zweite Terahertz-Sensor (150, 155) in einem festen Sensorabstand oder einer festen Sensorhöhe (D) miteinander verbunden sind; und dadurch dass der erste und der zweite Terahertz-Sensor (150, 155) in einer kollinearen Position angebracht sind; und dadurch dass die oben genannte Durchführung einer Materialdickenmessung eine Dicke (d4) der ersten Laufflächenschicht (160) unter Verwendung des ersten, zweiten und dritten Abstands (d1, d2, d3) und der oben genannten festen Sensorhöhe oder des oben genannten festen Sensorabstands (D) bestimmt.

2. Verfahren nach Anspruch 1, wobei das Bestimmen der Dicke (d4) der ersten Laufflächenschicht (160) das Subtrahieren des ersten, zweiten und dritten Abstands (d1, d2, d3) von der festen Sensorhöhe oder dem festen Sensorabstand (D) umfasst.

3. Verfahren nach Anspruch 1 oder 2, wobei der erste und der zweite Terahertz-Sensor (150, 155) entweder ein und denselben Sensor oder verschiedene Sensoren darstellen.

4. Verfahren nach mindestens einem der vorhergehenden Ansprüche, wobei der erste und/oder der zweite Terahertz-Sensor (150, 155) ein Sensor ist, der aus einem gepulsten Terahertz-Sensor und einem Pulsfrequenz-Sensor ausgewählt ist.

5. Verfahren nach mindestens einem der vorhergehenden Ansprüche, wobei die Lauffläche des Reifens zusätzlich eine dritte Laufflächenschicht (120) umfasst, die aus einer nicht elektrisch leitenden Verbindung hergestellt ist.

6. Verfahren nach mindestens einem der vorhergehenden Ansprüche, wobei der erste und/oder der zweite Terahertz-Sensor (150, 155) einen Niederfrequenz-Terahertz-Sensor darstellen, der einen Frequenzbereich von 50 bis 200 GHz besitzt; oder wobei der erste und/oder der zweite Terahertz-Sensor (150, 155) einen Pulsfrequenz-Sensor darstellen, der einen Frequenzbereich von 50 GHz bis 2,2 THz oder von 50 GHz bis 400 GHz besitzt.

7. Verfahren nach mindestens einem der vorhergehenden Ansprüche, wobei einer der beiden Terahertz-Sensoren (150, 155) oder beide Sensoren einen frequenzmodulierten CW-Terahertz-Sensor darstellt oder darstellen.

8. Verfahren nach mindestens einem der vorhergehenden Ansprüche, wobei ein erster Spektraldatensatz, der von dem ersten Terahertz-Sensor (150) ausgegeben wird, einen zweiten Spektraldatensatz, der von dem zweiten Terahertz-Sensor (155) ausgegeben wird, überlagert.

9. Vorrichtung, die dazu bestimmt ist, eine Tiefe oder eine Dicke mehrerer Laufflächenschichten oder jeder Laufflächenschicht einer Lauffläche eines Luftreifens, der mindestens zwei Laufflächenschichten (130, 160) besitzt, zu messen, wobei die Vorrichtung (400) das Folgende umfasst:

einen Klapptisch (440), der eine obere Fläche (442), worauf die Lauffläche des Luftreifens geführt wird, und vorzugsweise eine Anzahl von Stützbeinen (443) besitzt, die dazu bestimmt sind, den Klapptisch (440) zu stützen;
einen ersten Terahertz-Sensor (450) und einen zweiten Terahertz-Sensor (455);
wobei der erste Terahertz-Sensor (450) mit einer Translationseinrichtung (452) verbunden ist, um den ersten Terahertz-Sensor (450) über die Breite der oberen Fläche (442) des Klapptisches (440) translatorisch zu bewegen;
wobei der erste Terahertz-Sensor (450) mit dem zweiten Terahertz-Sensor (455) über einen translatorisch beweglichen Tragrahmen (460) starr verbunden ist;
wobei der Tragrahmen (460) eine Translationsbewegung ausführt und der zweite Terahertz-Sensor (455) eine Translationsbewegung mit dem ersten Terahertz-Sensor (450) ausführt; und
wobei der erste und der zweite Terahertz-Sensor in einer kollinearen Position angebracht sind.

10. Vorrichtung nach Anspruch 9, wobei der zweite Terahertz-Sensor (450) unterhalb der oberen Fläche (442) des Klapptisches (440) angebracht ist und wobei der erste Terahertz-Sensor (450) oberhalb der oberen Fläche (442) des Klapptisches (440) angebracht ist.

11. Vorrichtung nach Anspruch 9 oder 10, wobei die Translationseinrichtung (452) einen Schrittmotor (452) ist oder umfasst und/oder wobei die Translationseinrichtung (452) an einer oberen Schiene (454) angebracht ist, die oberhalb der oberen Fläche (442) des Klapptisches (440) angebracht ist.

12. Vorrichtung nach mindestens einem der vorhergehenden Ansprüche 9 bis 11, wobei der erste und der zweite Terahertz-Sensor (450, 455) getrennt sind und mittels des translatorischen Transportrahmens (460) in einem festen Abstand angebracht sind.

13. Vorrichtung nach mindestens einem der vorhergehenden Ansprüche 9 bis 12, wobei einer der beiden Terahertz-Sensoren (150, 155) oder beide Sensoren einen frequenzmodulierten CW-Terahertz-Sensor oder einen gepulsten Terahertz-Sensor darstellen.

14. Vorrichtung nach mindestens einem der vorhergehenden Ansprüche 9 bis 13, wobei mindestens einer der ersten und zweiten Terahertz-Sensoren (450, 455) einen Niederfrequenz-Terahertz-Sensor darstellt, der einen Frequenzbereich von 50 bis 200 GHz besitzt, und/oder wobei mindestens einer der ersten und zweiten Terahertz-Sensoren (450, 455) einen Pulsfrequenz-Sensor darstellt, der einen Frequenzbereich von 50 GHz bis 2,2 THz oder von 50 GHz bis 400 GHz besitzt.

**Revendications**

1. Procédé destiné à mesurer une épaisseur d'une bande de roulement d'un bandage pneumatique, dans lequel le procédé comprend les étapes au cours desquelles :

on procure une bande de roulement d'un bandage pneumatique, dans lequel la bande de roulement du bandage pneumatique possède au moins une première couche de bande de roulement (160), réalisée à partir d'un premier composé, et une deuxième couche de bande de roulement (130), réalisée à partir d'un deuxième composé ; dans lequel la conductibilité électrique du premier composé est supérieure à la conductibilité électrique du deuxième composé ; ou dans lequel le premier composé est un composé électroconducteur et le deuxième composé est un composé non électroconducteur ;
on achemine en continu la bande de roulement du bandage pneumatique ;
on dispose un premier capteur térahertz (150) et un deuxième capteur térahertz (155) au dessus et en dessous de la bande de roulement du bandage pneumatique, respectivement; dans lequel le premier et le deuxième capteur térahertz (150, 155) sont configurés pour émettre un premier et un deuxième faisceau de rayonnement (152, 166), respectivement, dans la bande de roulement du bandage pneumatique ;

on reçoit, à partir du premier faisceau de rayonnement, un premier faisceau de rayonnement réfléchi (162) à partir d'une surface (161) de la première couche de bande de roulement (160) et on détermine une première distance (d1);

on reçoit, à partir du deuxième faisceau de rayonnement (166), un deuxième faisceau de rayonnement réfléchi (165) à partir d'une interface (141) de la première couche de bande de roulement et de la deuxième couche de bande de roulement (160, 130) et on détermine une deuxième distance (d2) ;

on reçoit, à partir du deuxième faisceau de rayonnement (166), un troisième faisceau de rayonnement réfléchi (164) à partir d'une surface de la deuxième couche de bande de roulement (130) et on détermine une troisième distance (d3) ; et

on met en œuvre une mesure de l'épaisseur de matière, de préférence une mesure en continu, répétée ou périodique de l'épaisseur de matière, au cours de l'acheminement en continu de la bande de roulements du bandage pneumatique, de la première et de la deuxième couche de bande de roulement (120, 160) par l'intermédiaire de l'émission du premier et du deuxième faisceau de rayonnement (152, 166) par le premier et le deuxième capteur térahertz (150, 155), respectivement, et par l'intermédiaire de la réception du premier, du deuxième et du troisième faisceau de rayonnement réfléchi (162, 165, 164), **caractérisé en ce que**

le premier et le deuxième capteur térahertz (150, 155) sont reliés l'un à l'autre à une distance de capteur ou à une hauteur de capteur fixe (D) ;

et **en ce que** le premier et le deuxième capteur térahertz (150, 155) sont disposés dans une position colinéaire ; et **en ce que** ladite mise en œuvre d'une mesure de l'épaisseur de matière détermine une épaisseur (d4) de la première couche de bande de roulement (160) en utilisant lesdites première, deuxième et troisième distances (d1, d2, d3) et ladite hauteur de capteur ou ladite distance de capteur fixe (D).

2. Procédé selon la revendication 1, dans lequel la détermination de l'épaisseur (d4) de la première couche de bande de roulement (160) comprend la soustraction desdites première, deuxième et troisième distances (d1, d2, d3) de ladite hauteur de capteur fixe ou de ladite distance de capteur fixe (D).

3. Procédé selon la revendication 1 ou 2, dans lequel le premier et le deuxième capteur térahertz (150, 155) représentent, soit un seul et même capteur, soit des capteurs différents.

4. Procédé selon au moins une des revendications précédentes, dans lequel le premier et/ou le deuxième capteur térahertz (150, 155) représentent un capteur choisi parmi un capteur térahertz pulsé et un capteur de fréquence pulsée.

5. Procédé selon au moins une des revendications précédentes, dans lequel la bande de roulement du bandage pneumatique englobe en outre une troisième couche de bande de roulement (120) qui est réalisée à partir d'un composé non électroconducteur.

6. Procédé selon au moins une des revendications précédentes, dans lequel le premier et/ou le deuxième capteur térahertz (150, 155) représentent un capteur térahertz basse fréquence qui possède une gamme de fréquences allant de 50 à 200 GHz ; ou dans lequel le premier et/ou le deuxième capteur térahertz (150, 155) représentent un capteur de fréquence pulsée qui possède une gamme de fréquences allant de 50 GHz à 2,2 THz ou de 50 GHz à 400 GHz.

7. Procédé selon au moins une des revendications précédentes, dans lequel un des deux capteurs térahertz (150, 155) ou les deux capteurs représentent un capteur térahertz à onde continue modulée en fréquence.

8. Procédé selon au moins une des revendications précédentes, dans lequel une première donnée spectrale émise par le premier capteur térahertz (150) vient se superposer à une deuxième donnée spectrale émise par le deuxième capteur térahertz (155).

9. Appareil qui est destiné à mesurer une profondeur ou une épaisseur de plusieurs couches de bande de roulement ou de chaque couche de bande de roulement d'une bande de roulement de bandage pneumatique qui possède au moins deux couches de bande de roulement (130, 160), dans lequel l'appareil (400) comprend :

une table pliante (440) qui possède une surface supérieure (442) pour y faire passer la bande de roulement du bandage pneumatique et de préférence un certain nombre de pieds de support (443) qui sont destinés à supporter la table pliante (440) ;

un premier capteur térahertz (450) et un deuxième capteur térahertz (455) ;

dans lequel le premier capteur térahertz (450) est relié à un moyen de translation (452) destiné à la translation du premier capteur térahertz (450) sur la largeur de la surface supérieure (442) de la table pliante (440) ;

dans lequel le premier capteur térahertz (450) est relié de manière rigide au deuxième capteur térahertz (455) par l'intermédiaire d'un cadre de support (460) effectuant un mouvement de translation ;

dans lequel le cadre de support (460) effectuant un mouvement de translation et le deuxième capteur térahertz (455) effectuent un mouvement de translation avec le premier capteur térahertz (450) ; et

dans lequel le premier et le deuxième capteur térahertz sont disposés dans une position colinéaire.

10. Appareil selon la revendication 9, dans lequel le deuxième capteur térahertz (450) est situé en dessous de la surface supérieure (442) de la table pliante (440) et dans lequel le premier capteur térahertz (450) est situé au-dessus de la surface supérieure (442) de la table pliante (440).

11. Appareil selon la revendication 9 ou 10, dans lequel le moyen de translation (452) représente ou comprend un moteur pas à pas (452) et/ou dans lequel le moyen de translation (452) est monté sur un rail supérieur (454) qui est situé au-dessus de la surface supérieure (442) de la table pliante (440).

12. Appareil selon au moins une des revendications précédentes 9 à 11, dans lequel le premier et le deuxième capteur térahertz (450, 455) sont séparés et sont disposés à une distance fixe au moyen du cadre de transport par translation (460).

13. Appareil selon au moins une des revendications précédentes 9 à 12, dans lequel un des deux capteurs térahertz (150, 155) ou les deux capteurs représentent un capteur térahertz à onde continue modulée en fréquence ou un capteur térahertz pulsé.

14. Appareil selon au moins une des revendications précédentes 9 à 13, dans lequel au moins un capteur parmi le premier et le deuxième capteur térahertz (450, 455) représente un capteur térahertz basse fréquence qui possède une gamme de fréquence allant de 50 à 200 GHz et/ou dans lequel au moins un capteur parmi le premier et le deuxième capteur térahertz (450, 455) représente un capteur de fréquence pulsée qui possède une gamme de fréquences allant de 50 GHz à 2,2 THz ou de 50 GHz à 400 GHz.

FIG. 1A

FIG. 1B

FIG. 2

FIG. 3

FIG. 4

EP 4 141 381 B1

FIG. 5

**EP 4 141 381 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3266582 A1